# EUROPEAN PATENT APPLICATION

(11) **EP 3 203 585 A1**
(43) Date of publication of application: **09.08.2017**
(21) Application number: 15846196.2
(22) Date of filing: 29.09.2015
(51) Int. Cl.: H01R 4/70, B29C 45/14, B29C 45/53, H02K 5/22

(54) **CONNECTION STRUCTURE AND PRODUCTION METHOD THEREFOR, AS WELL AS TRANSPORTATION EQUIPMENT, ELECTRIC POWER EQUIPMENT, ELECTRICITY GENERATION EQUIPMENT, MEDICAL EQUIPMENT, AND SPACE EQUIPMENT**

(30) Priority: 30.09.2014 JP 2014200200
(71) Applicant: Century Innovation Corporation, Tokyo 104-0033 (JP)
(72) Inventor: KAWASAKI, Hiroaki, Tokyo 104-0033 (JP)
(74) Representative: Schwabe - Sandmair - Marx
(86) International application number: PCT/JP2015/077409
(87) International publication number: WO 2016/052453

(57) **Abstract**

The present invention provides a connection structure and a manufacturing method therefor capable of increasing reliability of a connection part compared to the prior arts. A connection structure (30) according to the present invention includes a plurality of conductive members (31, 32), a connection part (33) that electrically connects the conductive members, and an electrically insulating molded body (34) in which the connection part is embedded. It is thereby possible to physically reinforce the connection part of the conductive members, keep the connection part in a hermetically sealed condition, thereby prevent corrosion and increase reliability compared to the prior arts.

## Description

### Technical Field

The present invention relates to a connection structure made up of a plurality of conductive members electrically connected together, a manufacturing method therefor, and transport equipment, power equipment, power generation equipment, medical instrument and space equipment.

### Background Art

Following Patent Literature 1 described below discloses an invention relating to a connection end insulated with an insulating cap. Patent Literature 1 discloses, for example, an embodiment in which a connection end of a coil conductor is insulated with an insulating cap. Conventionally, the insulating cap shown in Patent Literature 1 is provided separately, the insulating cap is swaged and fixed to the connection end to protect the connection end.

### Citation List

### Non-Patent Literature

### Patent Literature 1

Japanese Patent Application Laid-Open No.2011-97779

### Patent Literature 2

Japanese Patent Publication No.5527706

### Summary of Invention

### Technical Problem

However, such a conventional configuration using an insulating cap lacks reliability: unable to be sufficiently hermetically sealed at the connection end; and vulnerable to corrosion. Furthermore, when impact or the like is applied to the insulatin
g cap, if the insulating cap is crushed or the like, the impact is more likely to propagate to the connection end, causing damage or the like of the connection end.

The present invention has been implemented in view of such a problem, and it is an object of the present invention to provide a connection structure and a manufacturing method therefor capable of improving reliability of the connection part compared to prior arts.

### Solution to Problem

As a result of intensive studies to achieve the above-described object, the present inventor found that using an injection apparatus of the present invention would be able to appropriately embed an electrical connection part made up of conductive members joined together in an electrical insulating molded body and transform it into a connection structure with higher reliability than the prior arts, and came to complete the present invention. That is, the present invention is as follows.

A connection structure according to the present invention includes a plurality of conductive members, a connection part that electrically connects the conductive members and an electrically insulating molded body in which the connection part is embedded.

A method for manufacturing a connection structure according to the present invention includes molding an electrically insulating molded body around a connection part that electrically connects a plurality of conductive members and embedding the connection part in the molded body.

According to the present invention, it is possible to physically reinforce the connection part of the conductive members, keep the connection part in a hermetically sealed condition, thereby prevent corrosion and improve reliability compared to the prior arts.

According to the present invention, a recess is preferably formed in a part of a surface of the conductive member embedded in the molded body. When the molded body is molded, this makes it possible to enter molten resin into the recess and effectively prevent the molded body from coming off.

The present invention can adopt a configuration in which conductors of different kinds of metals are used for the plurality of conductive members. The present invention can appropriately prevent galvanic corrosion caused by potential differences among different kinds of metals.

In the present invention, the molded body is preferably molded using an injection apparatus that incorporates a melter, in which the melter includes a through hole, one opening of the through hole is an inflow port of an injection material, the other opening is an outflow port of the injection material, and an inner wall surface of the through hole is formed of an inclined surface so that the opening becomes narrower from the inflow port to the outflow port of the through hole. In the present invention, the molded body is more preferably molded using the injection apparatus that incorporates the melter, in which a gently inclined surface which is continuous to the inclined surface and more gently inclined than the inclined surface is formed on the inflow port side.

According to the present invention, it is possible to mold a molded body around the connection part using the injection apparatus that incorporates the melter having the above-described structure and embed the connection part using the molded body. In this case, according to the injection apparatus of the present invention, it is possible to use a small injection apparatus and downsize a molding die. However, when the molded body is formed, the conductive members are already incorporated as part of equipment, an apparatus, a machine or the like. That is, when the conductive members singly exist, the molding step for the molded body is not executed. Injection apparatuses are conventionally quite large and molding dies used to injection-mold molded bodies are also quite large. Conventionally, there have been no ideas of embedding a connection part of conductive members incorporated as part of equipment, an apparatus, a machine or the like in a molded body (it has been difficult to mold the molded body in the first place). The insulating cap shown in Patent Literature 1 or the like has been conventionally used. In contrast, according to the injection apparatus including the melter of the present invention, it is possible to downsize the injection apparatus and downsize the molding die, and set the molding die in the connection part of the conductive members already incorporated as part of equipment, an apparatus, a machine or the like and appropriately mold a small molded body of high quality using the injection apparatus of the present invention.

Note that the present invention can manufacture transport equipment, power equipment, power generation equipment, medical instrument, space equipment or the like provided with the above-described connection structure. Using the connection structure of the present invention makes it possible to appropriately meet high current and high heat resistance requirements, and achieve high reliability.

### Advantageous Effects of Invention

According to the connection structure of the present invention, it is possible to physically reinforce the connection part of the conductive members, keep the connection part in a hermetically sealed condition to thereby prevent corrosion, and increase reliability compared to prior arts.

### Brief Description of Drawings

FIG. 1 is a partial perspective view of a connection structure according to an embodiment;
FIG. 2 is a schematic partial cross-sectional view of a connection structure according to a first embodiment;
FIG. 3 is a schematic partial cross-sectional view of a connection structure according to a second embodiment;
FIG. 4 is a schematic partial cross-sectional view of a connection structure according to a third embodiment;
FIG. 5 is a schematic partial cross-sectional view of a connection structure according to a fourth embodiment;
FIG. 6 is a schematic partial cross-sectional view of a connection structure according to a fifth embodiment;
FIG. 7 is a schematic partial cross-sectional view of a connection structure according to a sixth embodiment;
FIG. 8 is a partial perspective view of a connection structure according to an embodiment different from that in FIG. 1;
FIG. 9 is a schematic partial cross-sectional view of a connection structure according to a seventh embodiment;
FIG. 10 is a schematic partial cross-sectional view of a connection structure according to an eighth embodiment;
FIG. 11 is a schematic partial cross-sectional view of a connection structure according to a ninth embodiment;
FIG. 12 is a schematic partially enlarged cross-sectional view of a recess in FIG. 11;
FIG. 13 is a schematic partial cross-sectional view of a connection structure according to a tenth embodiment;
FIG. 14 is a schematic partial cross-sectional view of a connection structure according to an eleventh embodiment;
FIG. 15 is a schematic partial cross-sectional view of a connection structure according to a twelfth embodiment;
FIG. 16 is a schematic cross-sectional view of an injection apparatus according to the present embodiment;
FIG. 17 is a schematic cross-sectional view of an injection apparatus illustrating a state in which resin pellets are supplied to the injection apparatus shown in FIG. 16;
FIG. 18 is a schematic cross-sectional view for describing a molding step of the connection structure using the injection apparatus according to the present embodiment;
FIG. 19 is a longitudinal cross-sectional view of a melter according to the present embodiment;
FIG. 20 is a longitudinal cross-sectional view of a melter according to an embodiment different from that in FIG. 19;
FIG. 21 is a schematic cross-sectional view of an injection apparatus according to an embodiment different from that in FIG. 16, illustrating a state in which resin pellets are supplied;
FIG. 22 is a schematic cross-sectional view of the injection apparatus, illustrating a state in which the melter which can move in a vertical direction (reciprocating movement) is caused to move upward from the state in FIG. 21; and
FIG. 23 is a schematic cross-sectional view for describing a molding step of the connection structure by causing the melter to move downward from the state in FIG. 22.

### Description of embodiments

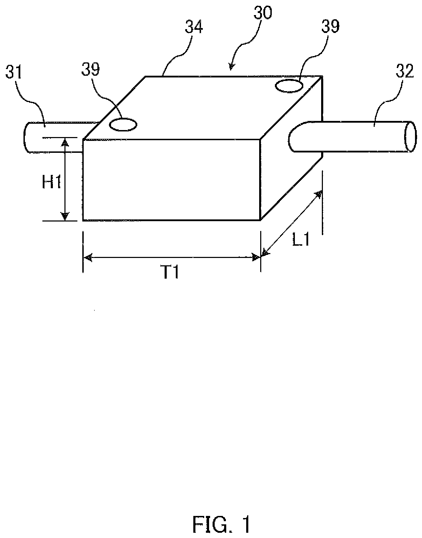

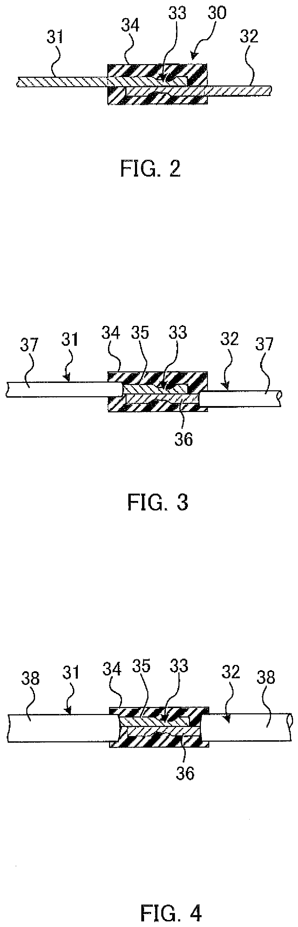

Hereinafter, embodiments of the present invention will be described in detail with reference to the accompanying drawings. FIG. 1 is a partial perspective view of a connection structure according to an embodiment. FIG. 2 is a schematic partial cross-sectional view of the connection structure according to a first embodiment.

As shown in FIG. 1 and FIG. 2, a connection structure 30 is constructed of a plurality of conductive members 31 and 32, a connection part 33 in which the conductive members 31 and 32 are electrically connected together and a molded body 34 in which the connection part 33 is embedded. The entire connection part 33 is embedded in the molded body 34.

In the configuration shown in FIG. 1 and FIG. 2, the conductive members 31 and 32 extend in opposite directions from mutually facing surfaces of the molded body 34 respectively. However, the positional relationship between the conductive members 31 and 32 with respect to the molded body 34 is presented as an example, which is however not particularly limited. Note that FIG. 2 to FIG. 7 illustrate a configuration in which a plurality of conductive members extend in mutually opposite directions from the mutually facing surfaces of the molded body 34.

The conductive members 31 and 32 shown in FIG. 1 and FIG. 2 are bare conductive members (conductors) and distal end portions of the respective conductive members 31 and 32 are electrically connected together. A method for forming the connection part 33 is not particularly limited, but, examples thereof include welding, soldering, swaging using a metallic ring. FIG. 2 is an example where the conductive members 31 and 32 are welded together. Note that cross-sectional shapes of the conductive members 31 and 32 may be round or rectangular, but these shapes do not limit their cross-sectional shapes.

The materials of the conductive members 31 and 32 are not particularly limited, but they are formed of conductors such as aluminum, silver or copper, and copper can be mainly used. The conductive members 31 and 32 may be made of conductors of the same material or conductors of different materials. Conductors of different kinds of metals may be preferably used in the present embodiment in particular.

In FIG. 1, the molded body 34 is a rectangular body, which however does not limit the shape and an arbitrary shape can be adopted such as a columnar or disk shape. Furthermore, as shown in FIG. 1, a fixing hole 39 may be provided in the molded body 34. The number of fixing holes 39 is not limited. The molded body 34 is integrally molded and includes no break or the like.

The molded body 34 is preferably formed of thermoplastic resin. The material used as the molded body 34 preferably has a high electrical insulating property and excellent heat resistance, and to be more specific, polycarbonate (PC), polyacetal (POM), polybutylene terephthalate (PBT), polyphenylene sulfide (PPS), liquid crystal polymer (LCP), polypropylene (PP), polyethylene (PE) or the like are suitably used.

The size of the molded body 34 is not particularly limited, but a width T1 and a length L1 are on the order of 5 mm to 20 mm and a height H1 is on the order of 5 mm to 10 mm.

FIG. 3 is a schematic partial cross-sectional view of a connection structure according to a second embodiment. In FIG. 3, parts with the same reference numerals as those in FIG. 2 denote the same members as those in FIG. 2. In FIG. 3, the conductive members 31 and 32 are conductive members with insulating coating obtained by applying an insulating coating 37 to surfaces of conductors 35 and 36, and in FIG. 3, the insulating coating 37 of the part of the connection part 33 is peeled to expose the conductors 35 and 36, and the exposed conductors 35 and 36 are connected together through welding or the like. The connection part 33 is embedded in the molded body 34 to secure electrical insulation of the connection part 33 from the outside. The insulating coating 37 is not particularly limited, and examples thereof include enamel and Holmet coating. That is, the conductive members 31 and 32 in FIG. 3 are enamel wires, Holmet wires or the like. Note that FIG. 3 shows a front view of the part of the insulating coating 37 in a state in which the conductors 35 and 36 are coated instead of showing a cross-sectional view thereof. The same applies to FIG. 4, FIG. 6, FIG. 7, FIG. 9 to FIG. 11, and FIG. 13 to FIG. 15.

FIG. 4 is a schematic partial cross-sectional view of a connection structure according to a third embodiment. In FIG. 4, parts assigned the same reference numerals as those in FIG. 2 denote the same members as those in FIG. 2. In FIG. 4, the conductors 35 and 36 except the connection part 33 are coated with an insulating member 38. Although the material of the insulating member 38 is not limited, for example, vinyl may be used as the material. That is, the conductive members 31 and 32 in FIG. 4 are vinyl-coated electric wires or the like.

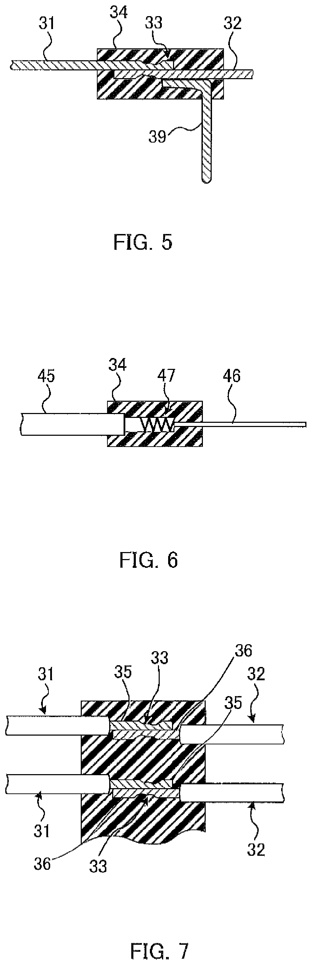

FIG. 5 is a schematic partial cross-sectional view of a connection structure according to a fourth embodiment. In FIG. 5, parts assigned the same reference numerals as those in FIG. 2 denote the same members as those in FIG. 2. In the configuration shown in FIG. 5, three conductive members 31, 32 and 39 are provided. As shown in FIG. 5, the conductive members 31, 32 and 39 are, for example, bare conductive members (conductors) and a connection part 33 is included where the respective conductive members 31, 32 and 39 are connected together by welding or the like. The connection part 33 is embedded in the molded body 34 to secure electrical insulation of the connection part 33 from the outside. As shown in FIG. 5, the number of conductive members used as the connection structure can be set to three or more.

FIG. 6 is a schematic partial cross-sectional view of a connection structure according to a fifth embodiment. In FIG. 6, parts assigned the same reference numerals as those in FIG. 2 denote the same members as those in FIG. 2. In FIG. 6, conductive members 45 and 46 of different types are electrically connected together. For example, the conductive member 45 is a vinyl-coated electric wire and the conductive member 46 is an enamel wire. Conductors are exposed at distal ends of the conductive members 45 and 46, and the conductors of the respective conductive members 45 and 46 are electrically connected together, for example, by soldering. A connectionpart 47 is thereby formed. The connection part 47 is embedded in the molded body 34 to secure electrical insulation of the connection part 47 from the outside. Thus, according to the present embodiment, it is possible to electrically connect conductive members of the same kind and electrically connect conductive members of different kinds.

FIG. 7 is a schematic partial cross-sectional view of a connection structure according to a sixth embodiment. In FIG. 7, parts assigned the same reference numerals as those in FIG. 3 denote the same members as those in FIG. 3. In FIG. 7, a plurality of sets of the electrically connected conductive members 31 and 32 shown in FIG. 3 are provided and the connection part 33 of each set of the conductive members 31 and 32 is embedded in the molded body 34 to secure electrical insulation of each connection part 33 from the outside. Thus, a configuration is provided in which a plurality of connection parts 33 are embedded in one molded body 34.

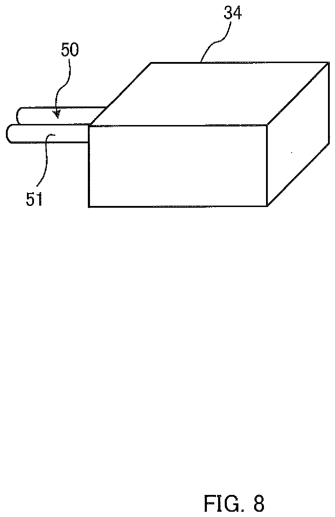

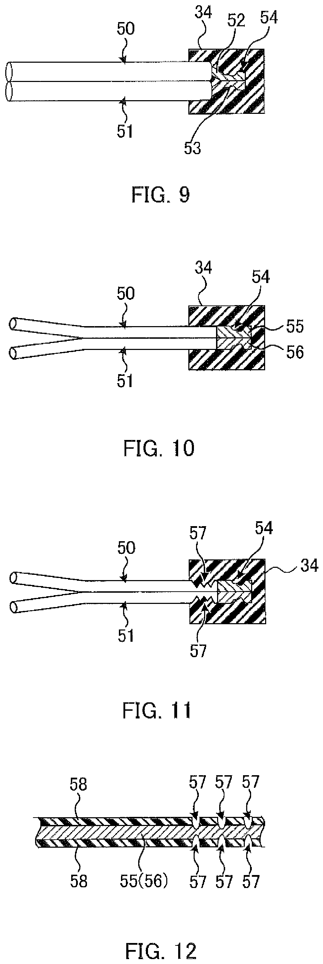

FIG. 8 is a partial perspective view of a connection structure according to an embodiment different from that in FIG. 1. FIG. 9 is a schematic partial cross-sectional view of a connection structure according to a seventh embodiment. FIG. 10 is a schematic partial cross-sectional view of a connection structure according to an eighth embodiment. FIG. 9 and FIG. 10 illustrate cross sections of the connection structure shown in FIG. 8 cut in a plane direction. In FIG. 8, FIG. 9 and FIG. 10, parts assigned the same reference numerals as those in FIG. 2 denote the same members as those in FIG. 2.

As shown in FIG. 8, FIG. 9 and FIG. 10, conductive members 50 and 51 constitute parallel electric wires with an insulating coating, insulating coatings are removed at distal ends of the respective conductive members 50 and 51, exposedconductors 52, 53 (55, 56) are electrically connected together by welding or the like to form a connection part 54. The connection part 54 is embedded in the molded body 34 to secure electrical insulation of the connection part 54 from the outside.

FIG. 11 is a schematic partial cross-sectional view of a connection structure according to a ninth embodiment. In FIG. 11, parts assigned the same reference numerals as those in FIG. 10 denote the same members as those in FIG. 10.

In FIG. 11, recesses 57 are provided in surfaces of the conductive members 50 and 51 embedded in the molded body 34. FIG. 12 is a partially enlarged schematic cross-sectional view of the recesses in FIG. 11. As shown in FIG. 12, the recess (bottomed concave portion) 57 penetrates an insulating coating 58 and reaches a conductor 55 (56) providing a dent in the conductor 55 (56). Note that there can also be a configuration in which the recess 57 is formed only in the part of the insulating coating 58, but the recess 57 is preferably formed in the conductor 55 (56). It is thereby possible to more effectively prevent the molded body from coming off. Although dents are likely to be produced in the connection part 54 because of welding or the like, the recess 57 is preferably provided in any place other than the connection part 54.

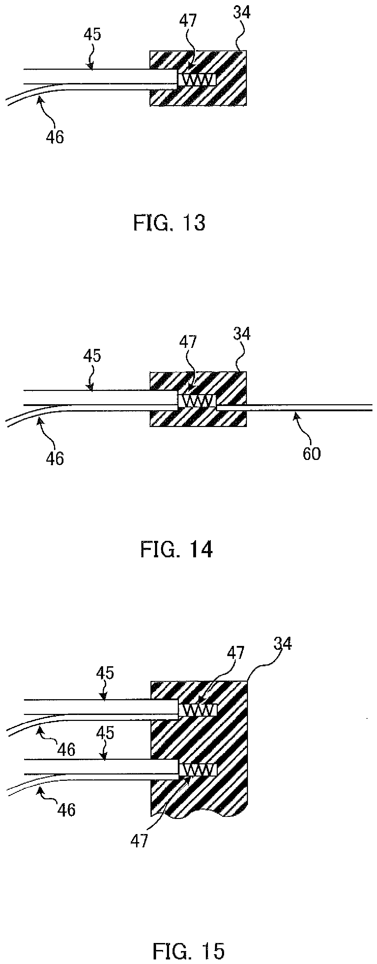

FIG. 13 is a schematic partial cross-sectional view of a connection structure according to a tenth embodiment. In FIG. 13, parts assigned the same reference numerals as those in FIG. 6 denote the same members as those in FIG. 6. In FIG. 13, a conductive member 45 is, for example, a vinyl-coated electric wire and a conductive member 46 is an enamel wire. Conductors are exposed at distal ends of the conductive members 45 and 46, and the conductors of the respective conductive members 45 and 46 are electrically connected together by soldering. In this way, a connection part 47 is formed. In FIG. 13, unlike FIG. 6, the respective conductive members 45 and 46 are caused to extend to the outside from the same surface side of the molded body 34. In FIG. 14, a conductive member 60 made up of an enamel wire or the like is further electrically connected to the connection part 47 in FIG. 13. In FIG. 15, a plurality of sets of the electrically connected conductive members 45 and 46 shown in FIG. 13 are provided, the respective connection parts 47 are embedded in the molded body 34 to secure electrical insulation of each connection part 47 from the outside.

In the present embodiment, the molded body 34 shown in FIG. 1 to FIG. 15 can be molded using an injection apparatus that incorporates a melter shown below.

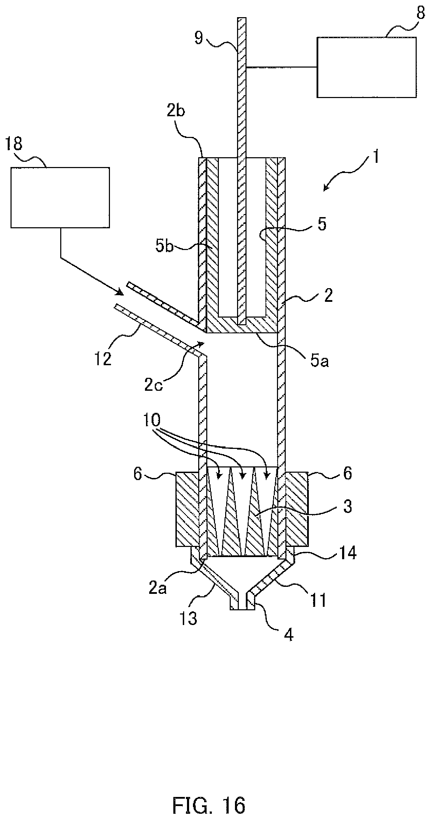

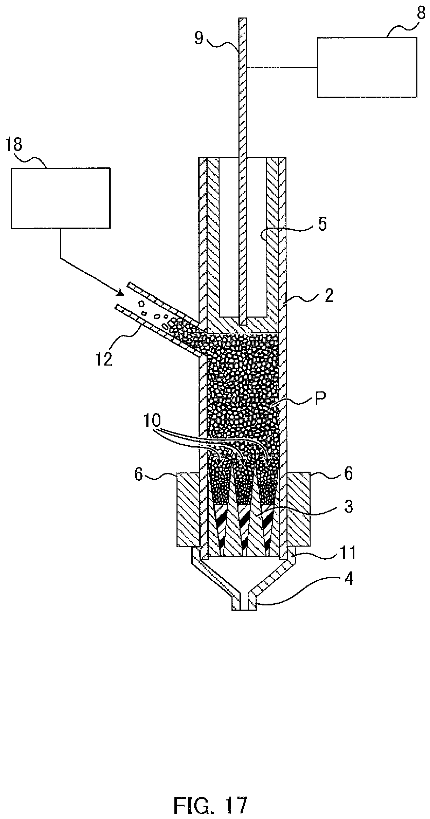

FIG. 16 is a schematic cross-sectional view of the injection apparatus according to the present embodiment. FIG. 17 is a schematic cross-sectional view of the injection apparatus illustrating a state in which resin pellets are supplied to the injection apparatus shown in FIG. 16. FIG. 17 is a schematic cross-sectional view for describing a molding step of a connection structure using the injection apparatus according to the present embodiment.

An injection apparatus 1 is constructed of a cylinder 2, a melter 3 disposed in the cylinder 2, a nozzle part 4 located at a distal end of the injection apparatus 1, heating means for heating the melter 3, and pressurizing means for pressurizing molten resin and ejecting the resin to the outside from the nozzle part 4.

The melter 3 shown in FIG. 16 is fixed to the inside of the cylinder 2. The melter 3 is disposed on a distal end 2a side of the cylinder 2 (lower side in FIG. 1). A plunger 5 is provided in the cylinder 2 as the pressurizing means. In FIG. 16, the plunger 5 is disposed closer to a rear end 2b side of the cylinder 2 than the melter 3 (upper side in FIG. 1). As shown in FIG. 16, a predetermined distance is provided between the melter 3 and the plunger 5. The plunger 5 is supported by drive means so as to be movable in a vertical direction (reciprocating movement). The vertically movable plunger 5 is located at a most retracted position in the rear end direction of the cylinder 2 in FIG. 16 and FIG. 17, and FIG. 18 illustrates a state in which the plunger 5 is moved from the state in FIG. 17 toward the distal end direction of the cylinder 2 (downward direction in FIG. 16).

The cylinder 2 is formed into an elongated cylindrical shape having substantially constant inner diameter and outer diameter from the distal end 2a to the rear end 2b, but the shape thereof is not particularly limited. That is, the shape of the cylinder 2 is not particularly limited as long as the cylinder 2 has a mode in which the melter 3 can be fixed in the cylinder 2 and the plunger 5 as the pressurizing means can be moved in the vertical direction. For example, the cylinder 2 may have a square shape whose interior is hollow.

The material of the cylinder 2 is not particularly limited, but iron or stainless steel with a large content of iron or the like is preferably used out of the necessity for rapid heating.

As shown in FIG. 16, the cylinder 2 is provided with a pellet supply port 2c. The pellet supply port 2c is formed into a hole shape communicating with a space in the cylinder so that the pellet supply port 2c is located between the melter 3 fixed on the distal end 2a side of the cylinder 2 and the plunger 5 in a state in which it is retracted toward the rear end 2b direction of the cylinder 2 (upward direction in the figure). A cylindrical supply pipe 12 is connected to the pellet supply port 2c.

A top end of the supply pipe 12 communicates with a storage part 18 that stores many resin pellets (injection material) and resin pellets are supplied from the storage part 18 to the pellet supply port 2c via the supply pipe 12. The storage part 18 is, for example, a hopper. The storage part 18 is provided with a screw conveyance or pneumatic apparatus, and can also forcibly charge resin pellets into the supply pipe 12. Note that without providing any storage part, resin pellets may also be supplied through a pipe from a remote place through screw conveyance or pneumatic transportation.

The plunger 5 is constructed of a pressing part 5a and a cylindrical outer circumferential side face part 5b provided around the pressing part 5a and formed toward the rear end 2b direction of the cylinder 2. As shown in FIG. 16, the size of the pressing part 5a coincides with the inner diameter of the cylinder 2 and a spatial region of the cylinder 2 from the pressing part 5a to the rear end 2b of the cylinder 2 is closed with the plunger 5. Note that rigid heat-resistant synthetic resin is fixed to the front face of the pressing part 5a (undersurface side in the figure) as needed. This makes it possible to thermally insulate the melter 3 from the plunger 5 to prevent the plunger 5 from depriving the melter 3 of heat and prevent the plunger 5 from being heated to transmit heat to a drive section 8.

The plunger 5 is connected to the drive section 8 and the plunger 5 is supported so as to be able to move in the vertical direction (reciprocating movement) inside the cylinder 2 by a drive force of the drive section 8. Note that as shown in FIG. 16, a drive transmission shaft (rod) 9 is disposed between the drive section 8 and the plunger 5, and the drive section 8 and the drive transmission shaft 9 together constitute "drive means." For example, the drive section 8 is a motor drive section and the drive transmission shaft 9 is a rack shaft, a pinion gear (not shown) is disposed between the motor drive section and the rack shaft, and the drive means is constructed of the motor drive section, the rack shaft and the pinion gear. Note that the cross-sectional shape of the drive transmission shaft (rod) 9 is, for example, circular, but the shape is not limited.

As shown in FIG. 16, heating means 6 for heating the melter 3 is provided around the cylinder 2. Thus, the heating means 6 is a component to heat the melter 3 from the outer circumferential surface of the cylinder 2 and is preferably formed to be cylindrical so that thermal conductivity to the melter 3 improves. The heating means 6 is provided at a position facing the melter 3 (so as to surround the melter 3).

For example, the heating means 6 is made up of an IH heater or the like configured like winding. To be more specific, the heating means 6 is preferably an electromagnetic induction apparatus, that is, IH (induction heating) coil, and is an IH coil wound around a resin or ceramic heat insulating material coil bobbin. Note that, instead of using the bobbin, both ends of the heating means 6 may be held by a holder of a heat insulating material. Furthermore, a band heater may also be used as another type of the heating means 6. Furthermore, the heating means 6 is not limited to the above-described one, but any means may be used if it is another heating apparatus available to the present invention. Note that the cylinder 2 is preferably provided with a thermocouple so as to be able to adjust the temperature of the cylinder 2 to a set value.

Although details of the melter 3 will be described later, the melter 3 is provided with a plurality of through holes (melting holes) 10 in the height direction. The shape of the outer circumferential surface of the melter 3 matches the shape of the inner wall surface of the cylinder 2 so that the entire outer circumferential surface of the melter 3 comes into contact with the inner wall surface of the cylinder 2. Therefore, if the inner wall surface (hollow part) of the cylinder 2 is shaped like a column, the outer circumferential surface of the melter 3 is also shaped like a column having the same diameter.

As shown in FIG. 16, an opening on the top surface side of the melter 3 of each through hole 10 is an inflow port and an opening on the undersurface side of the melter 3 of each through hole 10 is an outflow port.

As the material of the melter 3, metal which has a large heat capacity and excellent heat conduction or excellent heat resistance is suitable. To be more specific, copper, beryllium copper, brass, stainless steel, gold, chromium steel, nickel chromium steel, molybdenum steel, tungsten steel or the like is used, but the material is not particularly limited. Forming the melter 3 to a size, which will be described later, can effectively suppress unmelted residues of the resin pellets P (injection material).

As shown in FIG. 16, a head part 11 provided with the nozzle part 4 is provided at the distal end 2a of the cylinder 2. The head part 11 is constructed of the nozzle part 4, a funnel part 13 and a connection part 14. The head part 11 is connected to the cylinder 2 via the connection part 14. A material with good heat conduction is suitable for the head part 11 and, to be more specific, beryllium copper or copper is preferable.

As shown in FIG. 17, many solid resin pellets (injection material) P are supplied from the storage part 18 into the cylinder 2 via the supply pipe 12.

Although the material of the resin pellets P is not particularly limited, the material used as the molded body 34 preferably has a high electric insulating property and excellent heat resistance. Therefore,polycarbonate (PC), polyacetal (POM), polyethylenebutylene terephthalate (PBT), polyphenylene sulfide (PPS), liquid crystal polymer (LCP) or the like are suitable as the resin pellets P. Note that each resin pellet P has a diameter or a long side in size of on the order of 1 to 1.5 mm.

When the resin pellets P reach an upper part of the melter 3, the resin pellets P enter each through hole (melting hole) of the melter 3 from the inflow port (top surface in the figure). The resin pellets P which have entered each through hole 10 are pressed by resin pellets P that enter later toward the outflow port side of each through hole 10 (undersurface side in the figure). In this case, the melter 3 is kept at a temperature at which the resin pellets P are melted via the heating means 6.

As shown in FIG. 17, the resin pellets P that have flown into each through hole 10 are partially softened by heat from the melter 3.

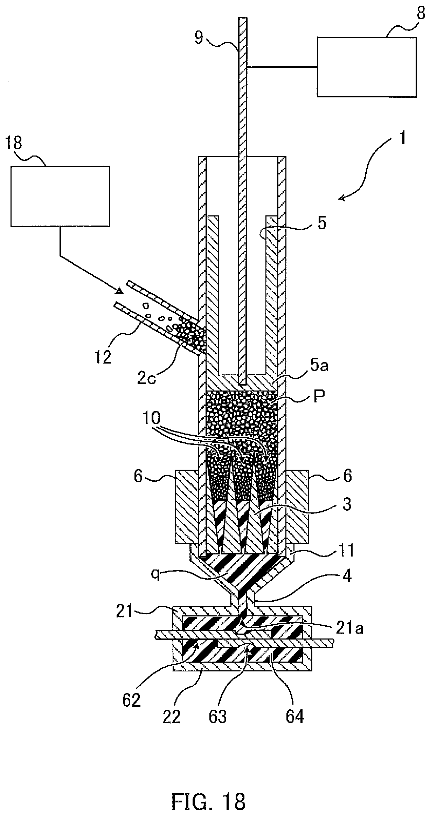

As shown in FIG. 18, the drive means is driven to drive the plunger 5 as the pressurizing means toward the direction of the nozzle part 4 (downward direction in the figure). This causes all the many resin pellets P located between the inflow port side of the melter 3 (top surface in the figure) and the undersurface of the pressing part 5a of the plunger 5 to be pressed against each other. As shown in FIG. 18, the pellet supply port 2c is closed with the plunger 5 due to the downward movement of the plunger 5.

As the plunger 5 moves, the resin pellets P that have flown into each through hole 10 of the melter 3 are also pressurized. Thus, the resin pellets P are pressurized and placed in a hermetically sealed condition in each through hole 10, further melted by heat from the melter 3 and molten resin q flows from the outflow port (undersurface side) of the melter 3 into the head part 11. The molten resin q is pressurized while being kept in the highly hermetically sealed condition and ejected to the outside from the nozzle part 4.

In FIG. 18, the nozzle part 4 is located at a supply port 21a of an upper die 21 making up the molding die and injects the molten resin q into the upper die 21 and the lower die 22. The charged molten resin q is then cooled to become solid. An injection time of the molten resin q by the injection apparatus 1 is several hundreds of milliseconds to several seconds (e.g., on the order of onesecond). As shown in FIG. 18, a conductive connection body 62 which is composed of a plurality of conductive members electrically connected together in advance is arranged in the molding die, and it is possible to embed the conductive connection body 62 in a molded body 64 through injection of the molten resin q and thereby secure electrical insulation of the connection part 63 of a conductive connection body 62 from the outside.

Next, the melter 3 according to the present embodiment will be described in detail. As has already been described, the melter 3 is provided with a plurality of through holes 10. The melter 3 is provided with a function for passing the resin pellets P through each through hole 10 and melting the resin pellets P. In this case, if unmelted residues of the resin pellets P are produced, this is likely to cause clogging in the through hole 10. Furthermore, when unmelted residues of the resin pellets P are discharged from the melter 3, this may result in clogging in the nozzle part 4 located on the distal end side of the melter 3, affecting quality of the inter-member joining body and the resin molded product. For this reason, the melter 3 is required to have a mode capable of effectively preventing unmelted residues of the resin pellets P when generating molten resin.

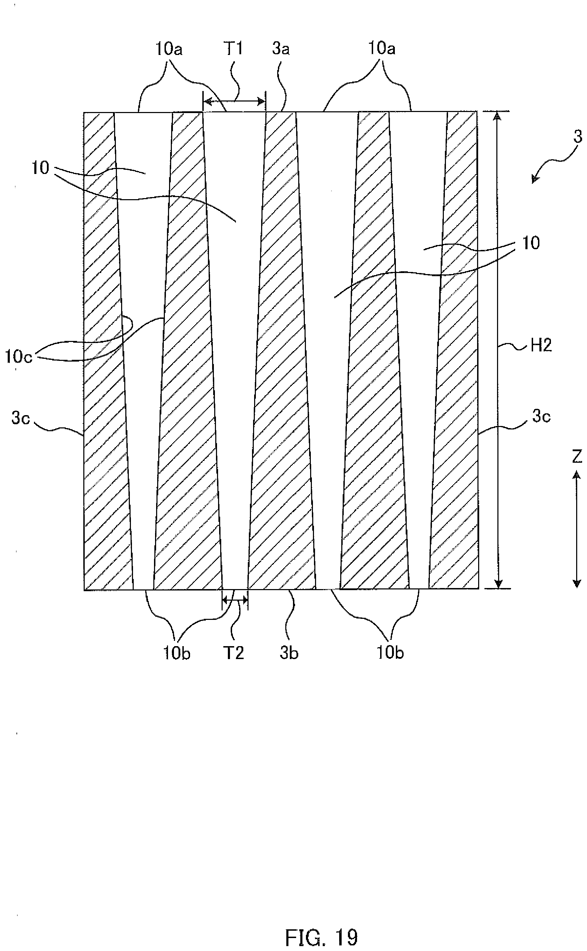

FIG. 19 is a longitudinal cross-sectional view of the melter as the first embodiment . The melter 3 includes a top surface 3a, an undersurface 3b and an outer circumferential surface 3c located between the top surface 3a and the undersurface 3b. The top surface 3a and the undersurface 3b are surfaces facing each other and parallel to each other.

As shown in FIG. 19, a plurality of through holes 10 provided from the top surface 3a to the undersurface 3b (toward the height direction (Z)) are formed in the melter 3. An opening of each through hole 10 in the top surface 3a is an inflow port 10a and an opening in the undersurface 3b is an outflow port 10b.

Although the number of through holes 10 can be set arbitrarily, the number of through holes 10 is preferably plural. Furthermore, the number of through holes 10 may be preferably set so that the ratio of the total area of the inflow ports 10a of the respective through holes 10 to the area of the top surface 3a (inflow port surface) of the melter 3 becomes, for example, 50% or higher.

Although the plurality of through holes 10 may be arranged regularly or randomly, it is possible to increase melting efficiency by uniformly distributing the respective through holes 10 over the entire top surface (inflow port surface) 3a and undersurface (outflow port surface) 3b.

As shown in FIG. 19, an inner wall surface 10c of the through hole 10 is formed of an inclined surface so that the opening gradually becomes narrower from the inflow port 10a to the outflow port 10b in each through hole (melting hole) 10. The respective through holes 10 are preferably formed in a direction parallel to the height direction (Z) from the inflow port 10a to the outflow port 10b. Each through hole 10 is preferably frustum-shaped, and to be more specific, truncated cone or truncated pyramid may be presented. In FIG. 19, each through hole 10 has a truncated cone shape.

As shown in FIG. 19, the inflow port 10a of each through hole 10 has an opening width of T1 and the outflow port 10b of each through hole 10 has an opening width of T2. The opening width T1 is greater than the opening width T2. When each through hole 10 has a truncated cone shape, the opening width T1 and the opening width T2 can be calculated as opening diameters. When the through hole 10 has a truncated pyramid shape, the opening width T1 and the opening width T2 represent the widths of the longest straight lines of the sides or diagonals.

In FIG. 19, the opening width T1 is adjusted to within a range of 4.1 mm to 10 mm and the opening width T2 is adjusted to within a range of 1.0 mm to 4.5 mm. In the present specification, notations "lower limit value to upper limit value" is assumed to include a lower limit value and an upper limit value.

The resin pellets P are caused to flow from the inflow port 10a of each through hole 10 of the melter 3 into the melter 3 shown in FIG. 19, heated, pressurized and melted, and molten resin is caused to flow out from the outflow port 10b of each through hole 10.

As shown in FIG. 19, the inflow port 10a of each through hole 10 is opened greater than the outflow port 10b. For this reason, the resin pellets P can be more easily guided into the inflow port 10a of the through hole 10. Since the opening width T1 of the inflow port 10a is adjusted to within the range of 4.1 mm to 10 mm, it is possible to substantially cover sizes of various commercially available resin pellets and appropriately guide the resin pellets P into the inflow port 10a. Furthermore, the resin pellets P are melted in the melter 3 and discharged out from the outflow port 10b, but since the inner wall surface 10c of the through hole 10 is an inclined surface, it is possible to smoothly guide the molten resin toward the direction of the outflow port 10b and by making the opening width T2 of the outflow port 10b narrower than the opening width T1 of the inflow port 10a, it is possible to increase the heat quantity and extrusion pressure on the outflow port 10b side and cause the molten resin to flow out from the outflow port 10b appropriately. Then, in the embodiment shown in FIG. 19, the opening width T1 of the inflow port 10a is set to 4.1 mm to 10 mm and the opening width T2 of the outflow port 10b is set to 1.0 mm to 4.5 mm. Thus, in the configuration in which the through hole 10 is inclined from the inflow port 10a to the outflow port 10b, by restricting sizes of the respective opening widths of the inflow port 10a and the outflow port 10b to within a predetermined range, it is possible to suppress unmelted residues of resin pellets P compared to the prior arts.

A length H2 from the inflow port 10a to the outflow port 10b of the through hole 10 is preferably 30 mm to 200 mm. The length H2 is determined by the size in a direction parallel to the height direction (Z) from the inflow port 10a to the outflow port 10b. When the length is too small, the melting path from the inflow port to the outflow port becomes shorter, increasing the possibility that unmelted residues of resin pellets P may be generated. On the other hand, when the length of the through hole 10 is too large, the inner wall surface of the through hole 10 becomes closer to a vertical surface than the inclined surface, causing a relative rise in the heat quantity and extrusion pressure on the outflow port 10b side with respect to the inflow port side to be more likely to decrease. In addition, when the length of the through hole 10 is too large, this leads to enlargement in size of the melter 3. The length H2 is preferably 70 mm to 150 mm.

The present embodiment appropriately adjusts the respective opening widths of the inflow port 10a and the outflow port 10b of the through hole 10 as well as the length of the through hole 10, and can thereby more effectively eliminate unmelted residues of resin pellets P and improve melting efficiency.

In the present embodiment, the opening width T1 of the inflow port 10a is preferably 4.1 mm to 6 mm. Furthermore, the opening width T2 of the outflow port 10b is preferably 1.0 mm to 2.9 mm. The lower limit value of the opening width T2 of the outflow port 10b is more preferably 1.6 mm.

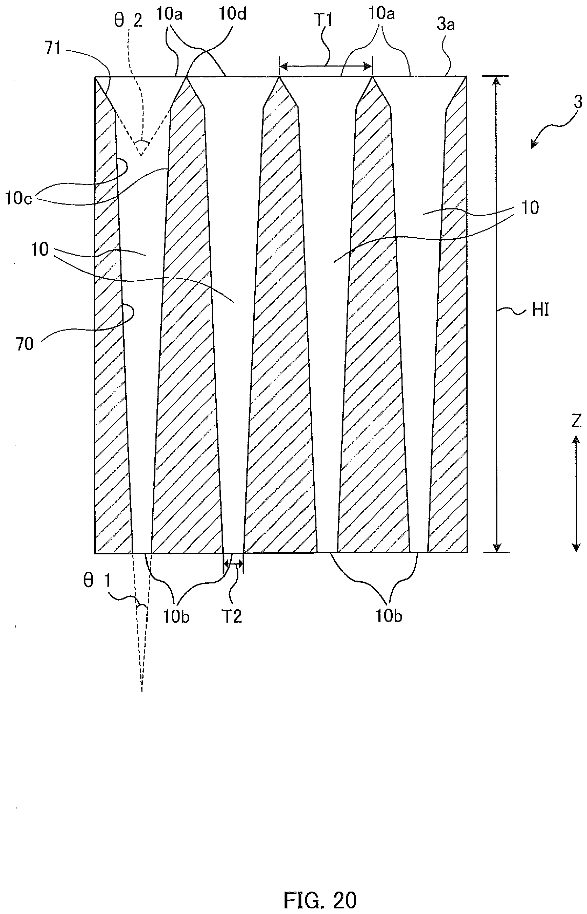

FIG. 20 is a longitudinal cross-sectional view of a melter according to a second embodiment. In the embodiment shown in FIG. 20 as well as FIG. 19, regarding each through hole (melting hole) 10 making up the melter 3, the inner wall surface 10c of the through hole 10 is formed of an inclined surface in such a way that the opening gradually becomes narrower from the inflow port 10a to the outflow port 10b.

In the embodiment shown in FIG. 20, a gently inclined surface is formed in continuation to the inclined surface making up each through hole 10 on the inflow port 10a side, the inclined surface having a gentler inclination than the inclined surface. To be more specific, each through hole 10 is formed of an inclined surface (first inclined surface) 70 having an opening angle of θ1 and a gently inclined surface (second inclined surface) 71 having an opening angle of θ2 on the inflow port 10a side. A relationship of θ1<θ2≤120° is satisfied. Note that the opening angle θ1 also has a similar opening angle in FIG. 20, and the opening angle θ1 is defined by a relationship between the inflow port 10a and the outflow port 10b.

Here, the "opening angle" refers to an angle formed between mutually facing inclined surfaces in the cross section shown in FIG. 20 and when an angle of inclination of each inclined surface is defined as an angle from the height direction (Z), the opening angle becomes substantially twice the angle of inclination.

As shown in FIG. 20, at points at which neighboring edges 10d of the inflow port 10a of the through hole 10 come closer to each other and come into contact or nearly come into contact with each other, the edges 10d have a blade shape or blade-like shape, and when the resin pellets P are located on the edges 10d, the resin pellets P are crushed, separated apart into fine pieces, which further facilitates entries of the resin pellets P into the through hole 10 and suppresses clogging in the through hole 10.

As shown in FIG. 20, the inclined surface 70 having a steep inclination is formed from the outflow port 10b to a position close to the inflow port 10a and the gently inclined surface 71 having a gentle inclination is formed only in the vicinity of the inflow port 10a.

Note that the inclined surface may be formed so as to have three or more stages. Note that the inclined surface is preferably formed in a two-stage inclination structure in which most of the through hole is formed of the steep inclined surface 70 and the gently inclined surface 71 is formed only in the vicinity of the inflow port 10a.

As described above, in FIG. 20, the inner wall surface of the through hole 10 is formed of an inclined surface first so that the opening becomes narrower from the inflow port 10a to the outflow port 10b of the through hole 10. Since the opening of the inflow port 10a is greater than that of the outflow port 10b in this way, it is possible to guide the resin pellets P into the inflow port 10a of the through hole 10 more easily. The resin pellets P are melted in the melter 3 and flow out from the outflow port 10b, and since the inner wall surface of the through hole 10 is an inclined surface in this case, the resin pellets P can be smoothly guided toward the outflow port direction, and moreover by making the opening of the outflow port 10b narrower than the opening of the inflow port 10a, it is possible to increase the heat quantity and extrusion pressure on the outflow port side and cause molten resin to flow out from the outflow port 10b appropriately. In the embodiment shown in FIG. 20, the gently inclined surface 71 is formed on the inflow port 10a side. This further makes it easier to guide the resin pellets P into the inflow port 10a of the through hole 10. It is also possible to prevent flat parts from being formed on the inflow port surface of the melter and form sharp edges between the respective inflow ports (see FIG. 20). Therefore, an effect that the resin pellets P will be fine-cut at the edges 10d of the inflow port 10a can also be expected, and as a result, it is possible to reduce the amount of resin pellets P that remain on the top surface (inflow port surface) 3a of the melter 3.

The present embodiment particularly satisfies a relationship of θ1<θ2≤120°. θ2 is preferably 30° to 120°. θ2 is more preferably 30° to 90°. θ2 is further preferably 30° to 60°. Note that the opening angle θ1 is determined by the sizes of the inflow port 10a and the outflow port 10b and is an angle at least smaller than the opening angle θ1. To be more specific, θ1 is on the order of 0° to 20° or on the order of 0° to 10°. When θ2 is smaller than 30°, the difference from the opening angle θ1 becomes smaller, reducing the effect of reducing resin pellets P remaining on the top surface (inflow port surface) 3a of the melter 3 or the fine-cutting effect on the resin pellets P. When the opening angle θ2 becomes greater than at least 120°, the gently inclined surface 71 on the inflow port side becomes too gentle, causing the resin pellets P to be more easily deposited at some midpoint of the gently inclined surface on the inflow port side and leading to an increase in size of the melter 3. In contrast, by restricting the opening angle θ2 to within the above-described range as in the case of the present embodiment, it is possible to effectively improve the melting efficiency while securing a decrease in size of the melter 3.

In the embodiment shown in FIG. 20, it is preferable to adopt the opening widths T1 and T2 of the inflow port 10a and the outflow port 10b shown in FIG. 19. That is, the opening width T1 of the inflow port 10a is preferably 4.1 mm to 10 mm and the opening width T2 of the outflow port 10b is preferably 1 . 0 mm to 4.5 mm. The opening width T1 of the inflow port 10a is preferably 4.1 mm to 6 mm and the opening width T2 of the outflow port 10b is more preferably 1.0 mm to 2.9 mm. The lower limit value of the opening width T2 is further preferably 1.6 mm.

In the present embodiment, the length H1 from the inflow port 10a to the outflow port 10b of the through hole 10 is preferably 30 mm to 200 mm. The length H1 is more preferably 70 mm to 150 mm.

The melter 3 according to the present embodiment is used not only by being fixed in the injection apparatus 1 as shown in FIG. 16 but also by being configured to move in the vertical direction (reciprocating movement) through a cylinder as will be described below.

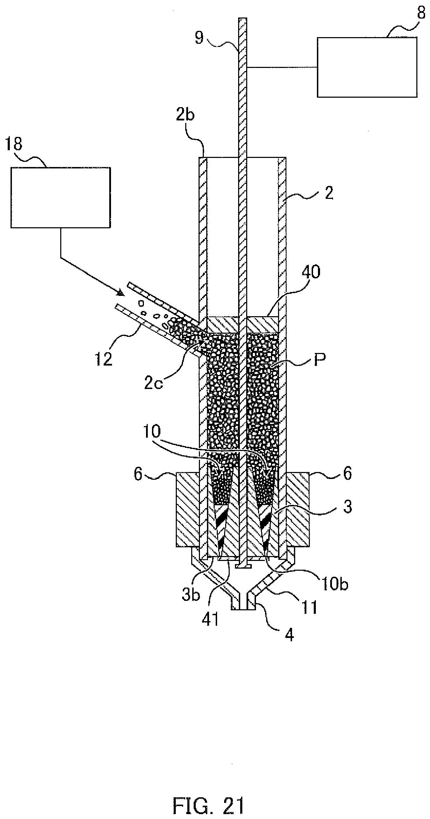

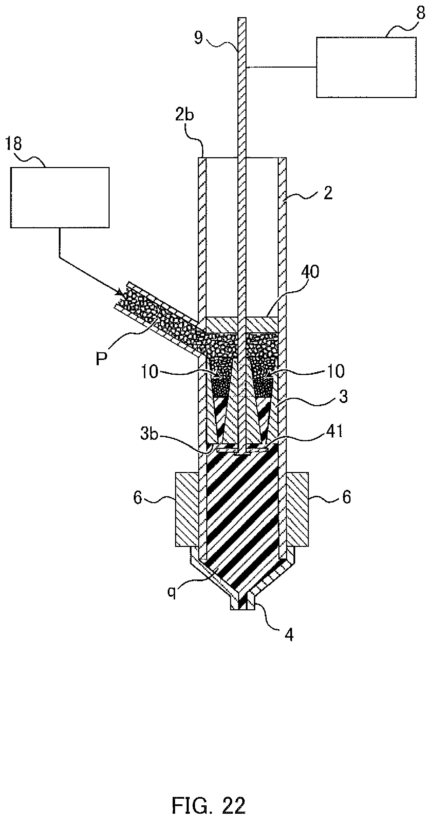

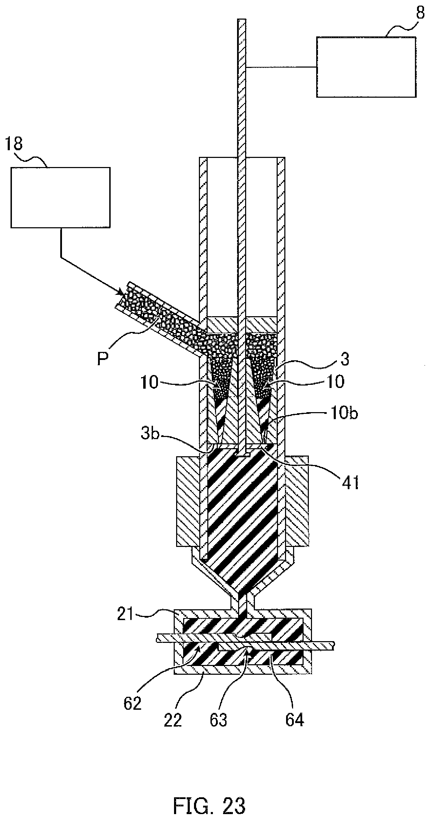

FIG. 21 is a schematic cross-sectional view of an injection apparatus according to an embodiment different from that in FIG. 16, illustrating a state in which resin pellets are supplied. FIG. 22 is a schematic cross-sectional view of the injection apparatus illustrating a state in which the melter which can move in the vertical direction (reciprocating movement) is caused to move upward from the state in FIG. 21. FIG. 23 is a schematic cross-sectional view of the injection apparatus illustrating a state in which the melter is caused to move downward from the state in FIG. 22 and molten resin is ejected to the outside from the nozzle part.

In FIG. 21 to FIG. 23, parts identical to those in FIG. 16 to FIG. 18 are assigned identical reference numerals. As shown in FIG. 21, the melter 3 and the drive section 8 are connected together via the drive transmission shaft 9. As shown in FIG. 21, a closing member 40 is provided closer to the rear end side of the cylinder 2 than the melter 3. The planar area of the closing member 40 coincides with the planar area of the space surrounded by the inner wall surface in the cylinder 2. The closing member 40 is fixed in the cylinder 2.

As shown in FIG. 21, the drive transmission shaft 9 penetrates the closing member 40 and is connected to the melter 3. As shown in FIG. 21, the drive transmission shaft 9 penetrates the melter 3 at the center and the melter 3 and the drive transmission shaft 9 are fixed and connected together.

As shown in FIG. 21, an opening/closing member 41 is provided on the undersurface (outflow port surface) 3b side of the melter 3. The opening/closing member 41 is supported so as to close or release the outflow port of each through hole 10 of the melter 3 based on vertical movement of the melter 3. The opening/closing member 41 is always urged toward the undersurface (outflow port surface) of the melter 3 using, for example, an elastic member (not shown). Operations of the drive section 8 and the drive transmission shaft 9 can release the opening/closing member 41 from the undersurface 3b of the melter 3.

The opening/closing member 41 is formed with an area smaller than that of the melter 3. A through hole may also be formed in the opening/closing member 41. In this case, the position and size of the through hole formed in the opening/closing member 41 are restricted so as not to overlap those of the outflowport 10b of each through hole 10 of the melter 3.

As shown in FIG. 21, the melter 3 is located on the distal end side of the cylinder 2 and in an initial state of FIG. 21, many solid resin pellets (injection material) P are supplied into the cylinder 2 from the storage part 18 via the supply pipe 12.

The resin pellets P are introduced into each through hole (melting hole) 10 of the melter 3 from the inflow port (top surface in the figure). The resin pellets P which have entered each through hole 10 are pressed toward the outflow port side of each through hole 10 (undersurface side in the figure) by resin pellets P that enter later. In this case, the melter 3 is kept at a temperature at which the resin pellets P are melted via the heating means 6.

As shown in FIG. 21, the resin pellets P that have flown into each through hole 10 are partially softened by heat from the melter 3.

Next, as shown in FIG. 22, drive means is driven to drive the melter 3 toward the direction of the closing member 40 (upward direction in the figure) (melting step). This causes all the many resin pellets P located between the inflow port side of the melter 3 (top surface in the figure) and the undersurface of the closing member 40 to be pressed against each other.

As shown in FIG. 22, although the heating means 6 is fixed to the outer circumference of the cylinder 2, even when the melter 3 is caused to move to and fro in the vertical direction by the drive means, the melter 3 can keep the heat source sufficiently in terms of the heat capacity of the melter 3. Note that a heat-insulating structure is preferably provided between the melter 3 and the drive transmission shaft 9 so as to prevent heat of the melter 3 from transmitting to the drive transmission shaft 9.

The resin pellets P charged into each through hole (melting hole) 10 of the melter 3 are heated and pressurized while being kept in an hermetically sealed condition, and thus caused to start melting. In this case, the opening/closing member 41 located on the undersurface (outflow port) 3b side of the melter 3 is released from the melter 3. In this way, molten resin q that has flown downward from the melter 3 remains between the melter 3 and the nozzle part 4.

Next, in FIG. 23, the drive means is operated to cause the melter 3 to move toward the direction of the nozzle part 4 (downward in the figure) (injection step). In this case, the opening/closing member 41 is in contact with the undersurface 3b of the melter 3, closing the outflow port 10b of each through hole 10 of the melter 3. Thus, molten resin q remaining between the melter 3 and the nozzle part 4 is pressurized while being kept hermetically sealed and ejected from the nozzle part 4. The molten resin q is injected between the upper die 21 and the lower die 22 making up the molding die. As shown in FIG. 21, a conductive connection body 62 composed of a plurality of conductive members electrically connected together in advance are arranged in the molding die, and it is possible to embed the conductive connection body 62 in a molded body 64 through injection of the molten resin q and thereby secure electrical insulation of a connection part 63 of the conductive connection body 62 from the outside.

Using the melter 3 in which the opening width T1 of the inflow port 10a shown in FIG. 19 is 4.1 mm to 10 mm and the opening width T2 of the outflow port 10b is 1.0 mm to 4.5 mm or using the melter 3 in which the inflow port 10a side of each through hole 10 shown in FIG. 20 is formed of a gently inclined surface, the injection apparatus shown in FIG. 21 to FIG. 23 can also more effectively improve melting efficiency compared to the prior arts.

As described so far, the connection structure according to the present embodiment includes a plurality of conductive members, a connection part that electrically connects the conductive members and an electrically insulating molded body in which the connection part is embedded.

The method for manufacturing the connection structure according to the present embodiment includes molding an electrically insulating molded body around the connection part which electrically connects a plurality of conductive members and embedding the connection part in the molded body.

Conventionally, the connection part that electrically connects conductive members is protected with an insulating cap. In contrast, the present embodiment protects the connection part of the conductive members by embedding the connection part in the molded body. In the case of the insulating cap, a gap is likely to be generated anyway between the insulating cap and the connection part and there is concern about a problem with corrosion. Furthermore, when the insulating cap is crushed by an impact, the impact propagates up to the connection part inside the insulating cap, causing damage to the connection part. Furthermore, the volume of the insulating cap is too large to house the insulating cap. In contrast, by embedding the connection part of the conductive members in the molded body as in the case of the present embodiment, it is possible to physically reinforce the connection part of the conductive members and keep it hermetically sealed, thereby prevent corrosion and increase reliability compared to the prior arts. Furthermore, since the connection part need not maintain mechanical strength by itself, it is possible to promote minimization (miniaturization) appropriate for the current capacity, and even if there are a plurality of connection parts, it is possible to miniaturize the connection structure. For this reason, it is possible to make the high current connection part highly reliable and reduce the size and weight thereof.

In the present embodiment, the recess 57 is preferably formed in the portion of the conductive member which is embedded in the molded body as shown in FIG. 11. The recesses 57 are more effectively formed in parts other than the connection part. It is thereby possible to fit molten resin into the recesses 57 when molding the molded body 34, increase the contact area between the conductor and resin, and more effectively prevent the molded body from coming off.

As described above, since the present embodiment adopts a configuration in which the connection part is embedded in the molded body, it is possible to effectively keep the connection part in a hermetically sealed condition. Therefore, even when conductors of different kinds of metals are used for a plurality of conductive members, it is possible to appropriately prevent the occurrence of galvanic corrosion caused by potential differences among different kinds of metals. Here, the "different kinds of metals" include metals made of different elements or metals with different mixing ratios. For example, metals with different iron-to-copper ratios are also considered as different kinds of metals.

In the present embodiment, it is possible to form a molded body using the injection apparatus that incorporates the melter shown in FIG. 16 to FIG. 18 and FIG. 21 to FIG. 23. As shown in FIG. 19, the melter includes through holes, one opening of each through hole is an inflow port of resin pellets (injection material) and the other opening is an outflow port of the resin pellets (injection material) and an inner wall surface of the through hole is formed of an inclined surface so that the opening becomes narrower from the inflow port to the outflow port of the through hole. As shown in FIG. 20, a gently inclined surface which is continuous to the inclined surface and more gently inclined than the inclined surface is preferably formed on the inflow port side of the melter.

Using the injection apparatus that incorporates the melter according to the present embodiment, it is possible to reduce the size of the injection apparatus and reduce the size of the molding die. The molding die is, for example, a metal plate processed so as to include a concave part. The conductive member is generally already incorporated as part of equipment, an apparatus or a machine. That is, in a state in which the conductive member singly exists, a molding step of the molded body is not executed. Conventionally, injection apparatuses are quite large and molding dies used to injection-mold molded bodies are also quite large. For this reason, conventionally, there have been no ideas of embedding the connection part of conductive members incorporated as part of equipment, an apparatus or a machine (it has been difficult to mold the molded body). As shown in Patent Literature 1, an insulating cap or the like is conventionally used. In contrast, the present embodiment uses an injection apparatus that incorporates the melter, and can thereby achieve downsizing of the injection apparatus and downsizing of the molding die, simply set the molding die in the connection part of the conductive member which is already incorporated as part of equipment, an apparatus or a machine, and mold a small molded body only in part of the connection part using the injection apparatus of the present embodiment.

As described above, by embedding a connection part which electrically connects a plurality of conductive members in a molded body, it is possible to physically reinforce the connection part, keep the connection part in a hermetically sealed condition and prevent corrosion. A protection condition of the connection part is extremely important in securing reliability in equipment, an apparatus, a machine or the like for which many connection members need to be connected in series. For example, it is possible to manufacture transport equipment, power equipment, power generation equipment, medical instrument or space equipment or the like using the connection structure of the present embodiment. Examples of the transport equipment include automobile, aircraft, railroad, and vessel. Examples of automobiles include electric vehicles. Examples of the power equipment include battery such as solar battery. Examples of the power generation equipment include thermal power generation elements. Examples of the space equipment include rocket and artificial satellite. Use of the connection structure of the present embodiment in this case makes it possible to appropriately meet high current, high strength and high heat resistance requirements and achieve high reliability. Furthermore, it is possible to reduce the size and weight of the high-current connection part.

### Industrial Applicability

The present invention can physically reinforce the connection part of the conductive member and keep the connection part in a hermetically sealed condition to thereby prevent corrosion, and can provide a connection structure capable of increasing reliability compared to the prior arts. Use of the connection structure according to the present embodiment makes it possible to manufacture an electric vehicle, solar battery or thermal power generation element or the like with excellent reliability.

The present application is based on Japanese Patent Application No.2014-200200, filed on September 30, 2014, entire content of which is incorporated herein by reference.

## Claims

1. A connection structure comprising:
a plurality of conductive members;
a connection part that electrically connects the conductive members; and
an electrically insulating molded body in which the connection part is embedded.

2. The connection structure according to claim 1, wherein a recess is formed in a part of a surface of the conductive member embedded in the molded body.

3. The connection structure according to claim 1 or 2, wherein conductors of different kinds of metals are used for the plurality of conductive members.

4. The connection structure according to any one of claims 1 to 3, wherein:
the molded body is molded using an injection apparatus incorporating a melter,
the melter comprises a through hole,
one opening of the through hole is an inflow port of an injection material, the other opening is an outflow port of the injection material, and
an inner wall surface of the through hole is formed of an inclined surface so that the opening becomes narrower from the inflow port to the outflow port of the through hole.

5. The connection structure according to claim 4, wherein the molded body is molded using the injection apparatus that incorporates the melter, wherein a gently inclined surface which is continuous to the inclined surface and more gently inclined than the inclined surface is formed on the inflow port side.

6. Transport equipment comprising the connection structure according to any one of claims 1 to 5.

7. Power equipment comprising the connection structure according to any one of claims 1 to 5.

8. Power generation equipment comprising the connection structure according to any one of claims 1 to 5.

9. A medical instrument comprising the connection structure according to any one of claims 1 to 5.

10. Space equipment comprising the connection structure according to any one of claims 1 to 5.

11. A method for manufacturing a connection structure comprising:
molding an electrically insulating molded body around a connection part that electrically connects a plurality of conductive members; and
embedding the connection part in the molded body.

12. The method for manufacturing a connection structure according to claim 11, wherein:
the molded body is molded using an injection apparatus that incorporates a melter,
the melter comprises a through hole,
one opening of the through hole is an inflow port of an injection material, the other opening is an outflow port of the injection material, and
an inner wall surface of the through hole is formed of an inclined surface so that the opening becomes narrower from the inflow port to the outflow port of the through hole.

13. The method for manufacturing a connection structure according to claim 12, wherein the molded body is molded using the injection apparatus that incorporates the melter in which a gently inclined surface which is continuous to the inclined surface and more gently inclined than the inclined surface is formed on the inflow port side.
